# EUROPÄISCHE PATENTANMELDUNG

(11) **EP 3 685 657 A1**
(43) Veröffentlichungstag der Anmeldung: **29.07.2020**
(21) Anmeldenummer: 20153167.0
(22) Anmeldetag: 22.01.2020
(51) Int. Cl.: A01G 9/14, F16B 12/50, F16B 12/32, F16B 12/36, A47B 43/00

(54) **ZELT ZUR PFLANZENAUFZUCHT**

(30) Priorität: 28.01.2019 AT 292019
(71) Anmelder: Kolundzija, Drazen, 1100 Wien (AT)
(72) Erfinder: Kolundzija, Drazen, 1100 Wien (AT)
(74) Vertreter: Babeluk, Michael

(57) **Zusammenfassung**

Die Erfindung betrifft ein Zelt zur Pflanzenaufzucht mit einer höhenverstellbaren Ablagefläche, wobei das Zelt eine Zeltrahmenkonstruktion (1) mit vertikalen Zeltstangen (3) und die Ablagefläche eine Auflage zur Aufnahme der Pflanzen als Untersetzer aufweist, dadurch gekennzeichnet, dass die Ablagefläche über Eckverbindungen (5,8) direkt mit den vertikalen Zeltstangen (3) stabil und gewichtskraftaufnehmend zur Aufnahme einer Belastung durch Pflanzen, Erde und Gießwasser von mindestens 2,0 kg/dm² verbunden ist.

## Beschreibung

Die Erfindung betrifft ein Zelt zur Pflanzenaufzucht mit einer Ablagefläche, wobei das Zelt eine Zeltrahmenkonstruktion mit vertikalen Zeltstangen und die Ablagefläche eine Auflage zur Aufnahme der Pflanzen als Untersetzer aufweist.

Die Ablagefläche gelangt in Verbindung mit einer Zeltrahmenkonstruktion eines Zeltes für Pflanzenaufzucht zur Anwendung. Die Ablagefläche ist in das Zeltgestänge integriert und stabilisiert dieses sogar. Hierbei kommt eine ebene stabile Stangenkonstruktion aus belastbaren Hohlrohren aus Metall zur Anwendung, wobei die Ablagefläche aus Hohlrohren direkt mit den vertikalen Zeltstangen der Zeltrahmenkonstruktion derart stabil verbunden ist, dass einer hohen Belastung durch Pflanzen, Erde und Gießwasser (mind. 2,0 kg/dm²) standgehalten werden kann. Diese ebene Stangenkonstruktion ist als Unterkonstruktion für eine Auflage gedacht, auf die schließlich die Pflanzen gestellt werden können.

Die ideale Auflage für die Stangenunterkonstruktion, sohin der Untersetzer für die Pflanzen, ist bereits seit langem im Handel erhältlich und wird unter der Handelsbezeichnung "Dänentisch" angeboten. Der Dänentisch ist eine spezielle mit Drainage versehene Unterlage aus Plastik ohne Tischbeine, auf welcher man Pflanzentöpfe abstellen kann, und welche selbst auf den Boden oder eine Unterkonstruktion gelegt wird.

Die gegenständlichen Zelte zur Pflanzenaufzucht sind mit nur wenigen Ausnahmen quaderförmig mit jeweils einer entsprechenden rechtwinkeligen Stangenkonstruktion, über welche eine passende lichtdichte und innen lichtreflektierende Zelthaut angepasst ist. Die Zelthaut von Zelten zur Pflanzenaufzucht hat stets mehrere Öffnungen um die Pflanzen von allen Seiten pflegen zu können und zudem um Stromanschlüsse sowie Zu- und Abluft (Lüftungstechnik) mit dem Zeltinneren zu verbinden. Da neben Pflanzen auch diverse Lüftungs- , Strom-, und Lichttechnik im Zeltinneren Platz finden soll, werden die Pflanzen üblicherweise auf eine hochgestellte Konstruktion (z.B. Tisch) aus wasser- und schimmelresistentem Material gestellt, um den Platz unterhalb des Tisches für diverse Technik zu nutzen.

In einem Zelt zur Pflanzenaufzucht wird eine starke Lichtquelle, meist eine Gasentladungslampe, zum Einsatz gebracht, welche neben einer hohen Lichtintensität vor allem Wärmeenergie abgibt, sodass die Pflanzen in einem gewissen Mindestabstand zur Lichtquelle zu halten sind. Die Zelte sind vorwiegend zur Pflanzenaufzucht im Inneren eines Gebäudes vorgesehen und haben daher meist eine Höhe bis höchstens 240 cm.

Aus dem Stand der Technik ist bekannt, dass teilweise an dem Grundriss eines Zeltes angepasste freistehende hochgestellte Ablageflächen auf den Zeltboden gestellt werden, so der Verbraucher selbst eine passende Ablagefläche, ein passendes Regal - einen Tische, oder auch eine vergleichbare Hochkonstruktion - in das Zelt stellt, um die zum Betrieb eines derartigen Zeltes benötigte technische Hardware vorwiegend unterhalb der Pflanzen verstauen zu können. Bis dato gibt es aber am Markt keine im notwendigen Ausmaß belastbare (mind. 2,0 kg/dm² Belastbarkeit) und im Zeltgestänge integrierte Ablagefläche.

Nachteilig an der gegenwärtigen Technik ist, dass eine ausreichend belastbare Abstellfläche für Pflanzen nicht in die Stützkonstruktion des Zeltes integriert ist, sondern extra vom Verbraucher angeschafft und am Zeltboden aufgestellt werden muss. Dabei findet man nur selten eine Unterkonstruktion, welche genau an die Zeltmaße angepasst ist und so eine optimale Raumausnützung ermöglicht. Zudem mangelt es diesen Ablageflächen an einer Höhenverstellbarkeit, weshalb im Falle eines erhöhten Pflanzenwachstums, die Pflanzen entweder zurückgeschnitten oder herab gebunden werden müssen, um nicht an der Lichtquelle zu verbrennen. Die Lichtquelle ist zwar häufig ebenfalls höhenverstellbar, aber eben nur begrenzt mit einem Mindestabstand zur Zeltdecke aufgrund der hohen Hitzeentwicklung. Einfache nichtintegrierte Ablageflächen können so im Falle eines Mehrbedarfs an Platz nicht einfach höher oder herab gestellt werden, sodass im Falle eines vermehrten Platzbedarfs (z.B. für technische Hardware) unterhalb oder oberhalb der Pflanzen mit zumindest einer weiteren Ablageflächen gearbeitet werden muss.

Die US 3,675,598 A zeigt ein Regal, welches höhenverstellbare Auflageflächen aufweist. Solche Regale können in Zelten angeordnet werden, damit die Auflageflächen nach Bedarf höher oder tiefer gestellt werden können. Nachteilig ist jedoch, dass die vertikalen Stangen sehr massiv aufgebaut werden müssen, damit sie auch höhere Lasten tragen können, was zu einer großen Ausführung führt. Dies ist nachteilig, da dies das ohnehin schon schwierige Anordnen des Regals im Zelt weiter verkompliziert und auch die Mindestgröße des Zelts durch den massiveren Aufbau vergrößert. Da solche Zelte oft in Innenräumen mit begrenztem Platz verwendet werden, ist dies ebenso nachteilig. Auch unvorteilhaft ist, dass die horizontalen Ablageflächen aus ineinander fest verlöteten dünnen, vollen Metallstäben bestehen, welche insgesamt ein engmaschiges großflächiges Gitter ergeben, das sich nicht zusammenlegen lässt. Durch die volle Ausführung wird ein Gitter bei ausreichend stabilem Aufbau sehr schwer, was unpraktisch in der Handhabung ist. Würde man dieses System in ein Zeltgestänge integrieren wollen, würde die Produktverpackung des Zeltgestänges unzumutbare Ausmaße annehmen, sodass die Ablagefläche weder einfach zu lagern, noch einfach zu transportieren oder zu rangieren ist. Die Gitterstäbe können zudem nicht gegeneinander verschoben werden, um Durchlässe für Schläuche, Stecker oder Lüftungsrohre nach Belieben durch die Ablagefläche zu führen. Ebenso nachteilig ist, dass die gesamte Ablagefläche nur über jeweils eine Klemmschraube pro Ecke mit den vertikalen Stangen verbunden ist. Die Konstruktion ist daher nicht belastbar und höchstens für leichte Materialien wie Textilien geeignet. Die Ablagefläche würde bei Belastung durch Pflanzen, Erde und Gießwasser an den vertikalen Stangen hinab gleiten, da die Feststellschrauben alleine das Gewicht nicht halten können.

In der FR 2076800 A5 ist ein Zelt zur Pflanzenaufzucht ohne Erde mit einer Stangenkonstruktion und einer darüber angeordneten Plane gezeigt. Sie beschreibt eine regalförmig ausgeführte Aufzuchtapparatur mit Wassertanks in verschiedenen Ausführungen, in welche man unterschiedlichste Pflanzenstecklinge einbringen und ohne Erde wurzeln lassen kann. Nachteilig ist, dass eine starr fixierte Ablagefläche vorliegt. Dies führt dazu, dass eine kleine Pflanze zuerst zu weit von der Lichtquelle entfernt ist, später aber, wenn sie größer ist, zu nahe an dieser ist. Es handelt sich um ein in sich geschlossenes System zur Pflanzenaufzucht, welches das Gießwasser mittels Pumpen immer wieder umwälzt, sodass die Pflanzen laufend mit Nahrung versorgt werden. Eine derartige starre Ablagefläche ist aber für die Pflanzenaufzucht mit Substrat ungeeignet, da diese mit einer viel höheren Gewichtsbelastung einhergeht, da bei der Hydroponik in der Regel geringe Wasserspiegel ausreichen, um die Pflanzen zu versorgen, bei der klassischen Kultivierung mit Erde oder einem anderen festen Substrat mehr Masse vonnöten ist. Werden die oben beschriebenen Regale in einem derartigen Zelt angeordnet, so müssen die Zelte genügend Platz für die Auflageflächen und auch für die vertikalen Stangen des Regals geben, womit diese besonders groß sein müssen. Durch die steigende Größe muss auch die Stangenkonstruktion des Zelts entsprechend massiv ausgeführt werden. Damit ist die gesamte Konstruktion sehr groß, sperrig und auch schwer. Darüber hinaus muss beim Kauf darauf geachtet werden, dass das Zelt und das Regal in ihren Größen zusammenpassen, um nicht zu viel Platz im Zelt zu verschwenden.

Die GB 1556118 A beschreibt zwei Regalsysteme, welche auch laufend vorwiegend in Kellern und Abstellräumen Verwendung finden. Nachteilig ist, dass das eine Regalsystem eine starre Rückwand benötigt, und nur einseitig an dieser mittels einzuhängendem Winkeleisen befestigt werden kann, dass per se in einem Zelt objektiv unmöglich ist, und das andere Regalsystem aus flächigen Blechplatten mit Falzen an den Rändern besteht, welche in vertikal stehende eckige Kantprofile aus Metall mit regelmäßigen Aussparungen eingehängt werden können, dass sich ebenso per se nicht in eine Zeltstangenkonstruktion integrieren lässt. Zudem ist nachteilig, dass beide Konstruktionen bloße Blechregalsysteme darstellen, welche keine beliebig einstellbaren Durchlässe durch die Ablageflächen ermöglichen und zudem bei benötigter Größe nicht annähernd belastbar sind. Um eine stabile Belastbarkeit auf einer Fläche von 120 x 120 cm oder 150 x 150 cm bei gegenständlichen Ablageblechen zu ermöglichen müssten derart dicke Stahlbleche zum Einsatz gelangen, dass diese nur mehr mittels technischer Hilfsmittel rangiert werden könnten. Beide Regalsysteme sind absolut ungeeignet, um in ein Zeltgestänge integriert zu werden.

Die Aufgabe der vorliegenden Erfindung ist es sohin, dem Verbraucher die Möglichkeit zu geben, bereits mit dem Erwerb eines Zelts zur Pflanzenaufzucht über eine entsprechende optimierte Ablagefläche für Pflanzen zu verfügen, welche eben im Zeltgestänge integriert ist. Zudem soll die gesamte Zeltrahmenkonstruktion eine verbesserte Stabilität aufweisen und gleichzeitig möglichst einfach aufbaubar und flexibel handhabbar sein.

Diese Aufgabe wird dadurch gelöst, dass die Ablagefläche höhenverstellbar über Eckverbindungen direkt mit den vertikalen Zeltstangen stabil und gewichtskraftaufnehmend zur Aufnahme einer Belastung durch Pflanzen, Erde und Gießwasser von mindestens 2,0 kg/dm² verbunden ist. Es wird durch eine mit dem Zeltgestänge direkt verbundene und höhenverstellbare Ablagefläche eine verbesserte Stabilität erreicht. Durch die direkte Verbindung der Auflagefläche mit den vertikalen Zeltstangen werden die vertikalen Stangen des Regals eingespart, womit der Aufbau erleichtert und auch eine leichtere Konstruktion ermöglicht wird. Darüber hinaus wirkt die Auflagefläche auf die Zeltrahmenstruktur stabilisierend, da es die vertikalen Stangen miteinander verbindet und damit eine Querverstrebung darstellt. Damit wirkt die Auflagefläche dual als Aufnahme für die Pflanzen und gleichzeitig als stabilisierendes Glied für die Zeltrahmenstruktur. Dadurch müssen die Stangen der Zeltrahmenstruktur weniger massiv ausgeführt werden, was zu einer weiteren Platzreduktion und Gewichtsverringerung führt.

Eine horizontale Fläche in annährend gleichem Ausmaß wie die Grundfläche der Zeltkonstruktion wird an den vertikalen Zeltstangen mittels einer Aufhängevorrichtung mit Klemmfunktion fixiert und kann infolge stufenlos der Höhe nach verstellt werden. Zwei Metallbacken, welche jeweils an der Innenseite eine halbkreisförmige Aussparung haben, umschließen die vertikale Zeltstange und können mittels Schraube so festgezogen werden, dass die vertikale Zeltstange fest umschlossen ist und die Aufhängevorrichtung, welche die Ablagefläche trägt, nicht mehr abrutschen kann.

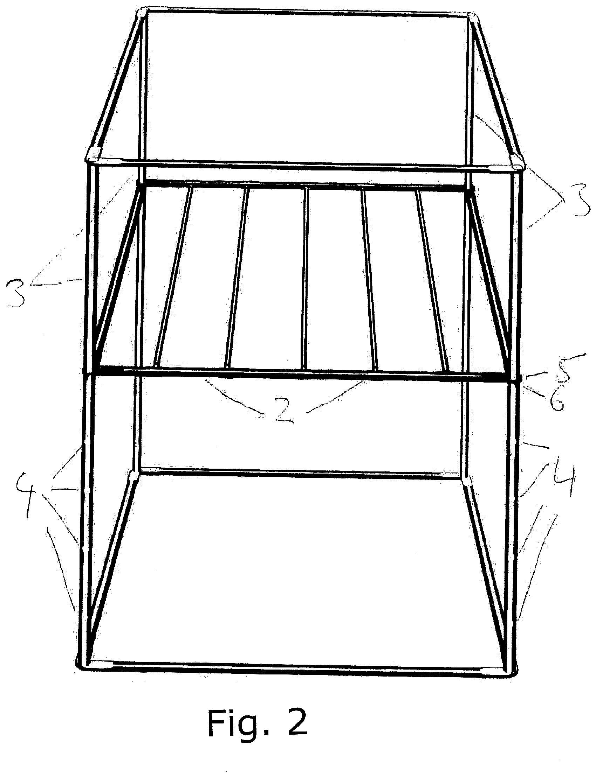

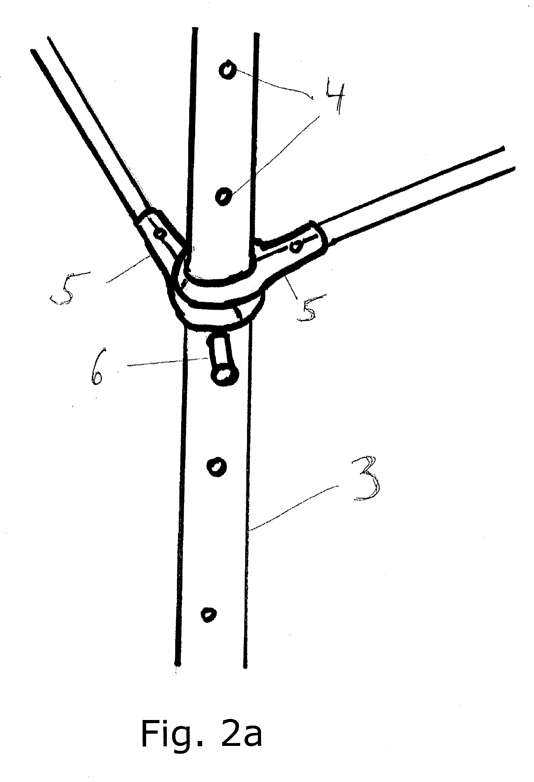

Die Stangenkonstruktion (auch Stangenunterkonstruktion) besteht aus einem horizontalen Viereck aus Metallhohlrohren, welches durch die Eckverbindungen zusammengehalten wird. Die Eckverbindungen weisen Löcher mit Klemmfunktion auf, durch die die vertikalen Zeltstangen geführt werden. Die Eckverbindungen können mittels Schraubmechanismus, welcher das Loch verkleinert, an den vertikalen Zeltstangen festgeklemmt werden. Innerhalb dieses Vierecks aus Metallhohlrohren können mehrere Stangen mit dem Rahmen verbunden werden, sodass sich eine stabile aber flexible Stangenunterkonstruktion ergibt (vgl. Fig. 2). Damit wird dem Verbraucher die Möglichkeit eingeräumt, das Raumvolumen oberhalb und unterhalb der Pflanzen je nach Bedarf zu verändern und so die höchstmögliche Flexibilität - vor allem im Zusammenhang mit der Unterbringung von Technik und dem Abstand der Pflanzen zur Lichtquelle - im Zeltinnenraum zu erreichen.

Zur höheren und sicheren Belastbarkeit der Ablagefläche weisen die vertikalen Zeltstangen in gleich engem Abstand Lochungen auf, durch welche ein Sicherungssplint aus Metall gesteckt werden kann, sodass die Ablagekonstruktion im Fall der Überlastung nicht entlang der vertikalen Stangen hinabrutschen kann. Kommt es zu einer zu hohen Gewichtsbelastung der Ablagefläche, kann diese höchstens bis zum nächsten Metallsplint entlang der vertikalen Zeltstange nach unten gleiten.

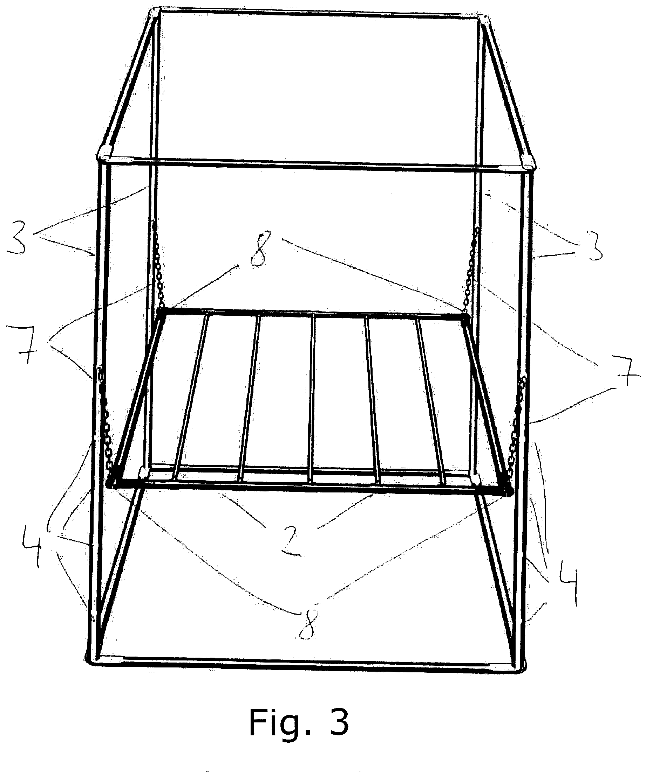

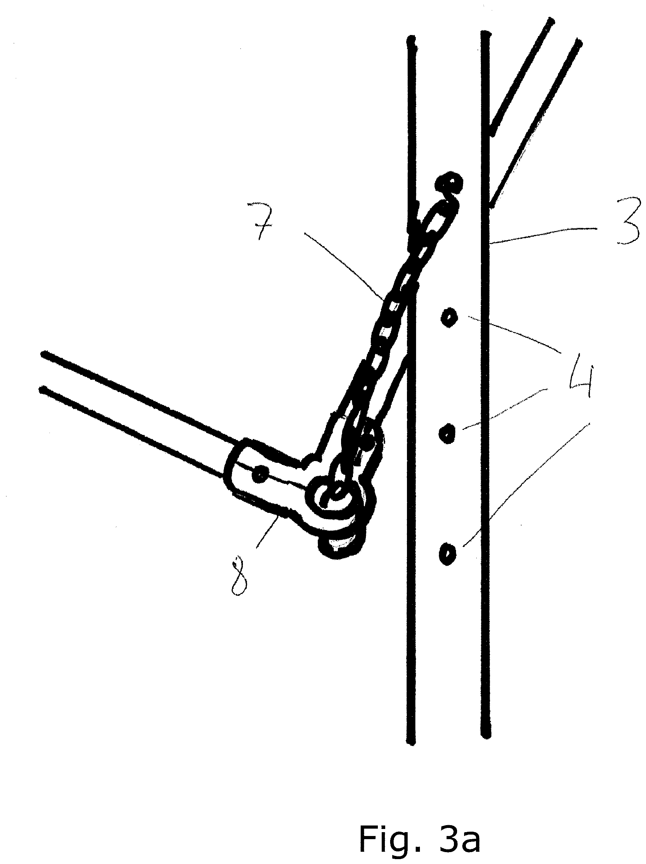

In einer Ausführungsform können die Löcher mittels Ketten und Haken, welche mit der Ablagefläche an den Ecken verbunden sind, zur Höhenverstellung genutzt werden, wobei die Ablagefläche nicht nur in einer Führung entlang der vertikalen Zeltstangen verlaufen kann, sondern auch frei schwebend - innerhalb der vertikalen Zeltstangen - montiert werden kann (vgl. Fig. 3)

In einer weiteren Ausführungsform kann die Ablagefläche statt in Form einer Stangenunterkonstruktion (vgl. Fig. 2) aus Hohlrohren gleich in Form einer Auflage mit Drainage montiert sein, auf welche die Pflanzen - ohne weiteren Bedarf einer Auflage - direkt abgestellt werden können.

Weitere Vorteile und Einzelheiten der Erfindung ergeben sich anhand der nicht einschränkenden Figuren sowie der dazugehörigen Figurenbeschreibung. Dabei zeigen:

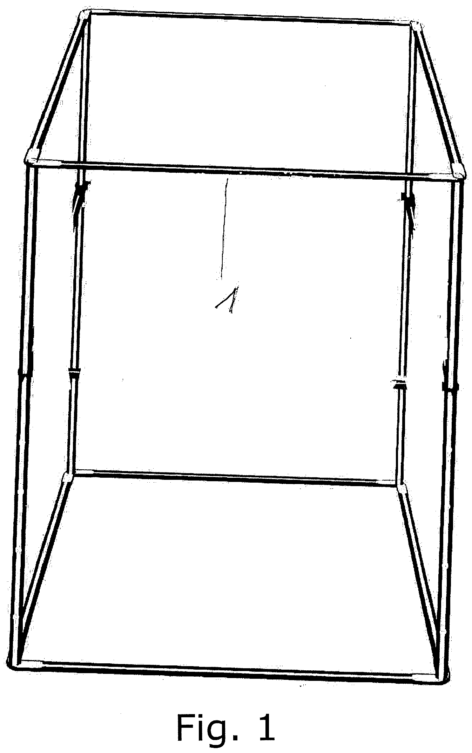

Fig. 1 eine handelsübliche Zeltrahmenkonstruktion 1 eines quaderförmigen Zelts zur Pflanzenaufzucht nach dem Stand der Technik.
Fig. 2 eine erfindungsgemäße erste Ausführungsvariante eines Zelts mit einer Zeltrahmenkonstruktion 1 mit der montierten Ablagefläche in Form einer Stangenunterkonstruktion 2, wobei die vertikalen Stangen 3 der Zeltrahmenkonstruktion 1 Lochungen 4 aufweisen. Die Ablagefläche ist an die vertikalen Zeltstangen 3 durch eine Führung in Form einer Eckverbindung mit Klemmfunktion 5 fixiert, wobei die Ablagefläche mittels Metallsplint 6 noch extra vor dem Abrutschen gesichert ist.
Fig. 2a ein Detail einer vertikalen Zeltstange 3 der Zeltrahmenkonstruktion 1 aus Fig. 2 mit Lochungen 4, wobei die Stangenunterkonstruktion 2 durch eine Führung in Form einer Eckverbindung mit Klemmfunktion 5 an der vertikalen Stange 3 fixiert und mittels Metallsplint 6, welcher durch eine der Lochungen 4 geht, gegen das Abrutschen gesichert ist.
Fig. 3 eine erfindungsgemäße zweite Ausführungsvariante eines Zelts mit einer Zeltrahmenkonstruktion 1 mit der montierten Ablagefläche in Form einer Stangenunterkonstruktion 2, wobei die Ablagefläche an den vertikalen Stangen 3 auf Höhe der Eckverbindungen 8 mittels einer Kette samt Haken 7 in den Lochungen 4 auf gleicher Höhe an der Zeltrahmenkonstruktion 1 aufgehängt ist.
Fig. 3a ein Detail einer vertikalen Zeltstange 3 mit den Lochungen 4 wobei die Eckverbindung 8 der Ablagefläche mittels einer Kette samt Haken am Ende 7 in einer Lochung 4 aufgehängt ist.

Fig. 1 zeigt eine handelsübliche Zeltrahmenkonstruktion 1 eines quaderförmigen Zelts zur Pflanzenaufzucht, welche dafür vorgesehen ist, eine lichtundurchlässige Zelthaut zu tragen, um im Inneren mittels Kunstlicht lebende Pflanzen zu züchten. Fig. 2 zeigt eine Zeltrahmenkonstruktion 1 eines Zeltes zur Pflanzenaufzucht, wobei bereits die höhenverstellbare Ablagefläche in Form einer Stangenunterkonstruktion 2, welche ein horizontales Rechteck aus Metallrohren ist, das wiederum durch Eckverbindungen zusammengehalten und durch mehrere Stangen als Querverstrebungen verstärkt wird, montiert ist. Die vertikalen Stangen 3 der Zeltrahmenkonstruktion 1 sind in gleichmäßigem Abstand und auf jeweils gleicher Höhe gelocht 4, sodass ein angebrachter Metallsicherungssplint 6 die Ablagefläche, welche mittels Führung in Form einer Eckverbindung mit Klemmfunktion 5 an die vertikalen Stangen 3 fixiert ist, vor dem Hinabrutschen an den vertikalen Zeltstangen 3 sichert. Fig. 2a zeigt eine vertikale Zeltstange 3, welche in regelmäßigen Abständen die Lochbohrungen 4 aufweist. An dieser vertikalen Zeltstange 3 ist die Ablagefläche als Stangenunterkonstruktion 2 mittels Führung in Form einer Eckverbindung mit Klemmfunktion 5 montiert, wobei diese, eben gleich einer Klemme, durch Festziehen einer Schraube die vertikale Zeltstange 3 fest umschließt, sodass die Ablagefläche mit schwerem Gewicht belastet werden kann. Zusätzlich wird die Ablagefläche durch einen Sicherungssplint 6 aus Metall vor dem Abrutschen geschützt, sodass bei zu hoher Gewichtsbelastung die Ablagefläche höchstens bis zum Metallsplint 6 entlang der vertikalen Zeltstange 3 nach unten gleiten kann. Fig. 3 zeigt eine weitere Ausführungsform der Ablagefläche. Sie zeigt eine Zeltrahmenkonstruktion 1 eines Zeltes zur Pflanzenaufzucht, wobei bereits die höhenverstellbare Ablagefläche in Form einer Stangenunterkonstruktion 2 mittels Aufhängung montiert ist. Die vertikalen Stangen 3 der Zeltrahmenkonstruktion 1 sind in gleichmäßigem Abstand und auf jeweils gleicher Höhe gelocht 4, sodass Haken am Ende einer Metallkette 7 in den Löchern auf gleicher Höhe rundum eingehängt sind. Die Ketten sind am anderen Ende mit den Führungen der Ablagefläche, welche bei dieser Ausführungsform Eckverbindungen ohne Klemmfunktion 8 sind, verbunden, sodass die Ablagefläche rundum auf gleicher Höhe durch die eingehängten Ketten gehalten wird. Fig. 3a zeigt mit einem vergrößerten Ausschnitt der Fig. 3 die Aufhängung der Eckverbindung der Ablagefläche ohne Klemmfunktion 8 mittels Kette samt Haken 7 in einer Lochung 4 einer vertikalen Zeltstange 3.

Darüber hinaus ist die Erfindung in den folgenden Punkten in bevorzugten Ausführungsformen näher beschrieben:
Punkt 1: Vorrichtung in Form einer Ablagefläche als Stangenunterkonstruktion (2) aus Hohlrohren aus Metall, geeignet zur Ablage einer Auflage, welche als Untersetzer zum Abstellen von Pflanzen in einem Zelt, welches zur Pflanzenaufzucht vorgesehen ist, Verwendung findet. Die Ablagefläche als Stangenunterkonstruktion (2) ist mit der Zeltrahmenkonstruktion (1) durch Führungen in Form von Eckverbindungen mit Klemmfunktion (5) mit den vertikalen Zeltstangen (3) verbunden, sodass die vertikalen Zeltstangen direkt durch die Eckverbindungen mit Klemmfunktion (5) geführt sind, welche wiederum mit Schrauben derart festgezogen werden können, dass die Ablagefläche als Stangenunterkonstruktion (2) mit einer Belastung von mindestens 2,0 kg/m² beschwert werden kann, ohne dabei an den vertikalen Zeltstangen (3) herab zu gleiten.
Punkt 2: Vorrichtung nach Punkt 1, dadurch gekennzeichnet, dass diese stufenlos entlang der vertikalen Zeltstangen (3) der Zeltrahmenkonstruktion (1) anhand einer Führung, welche eine Klemmfunktion aufweist (5), höhenverstellbar ist, in dem man die Klemmen rundum lockert und auf der gewünschten Höhe wieder feststellt.
Punkt 3: Vorrichtung nach Punkt 3 2, dadurch gekennzeichnet, dass die höhenverstellbare Ablagefläche durch die Anbringung von Sicherungssplinten (6) in den Lochungen (4) an den vertikalen Zeltstangen (3) unterhalb der Führungen in Form von Eckverbindungen mit Klemmfunktion (5) gegen das Abrutschen entlang der vertikalen Zeltstangen (3) gesichert wird.
Punkt 4: Vorrichtung nach Punkt 1, dadurch gekennzeichnet, dass die Ablagefläche nicht mittels Führungen in Form von Eckverbindungen mit Klemmfunktion (5) an den vertikalen Zeltstangen (3) verbunden ist, sondern die Führungen in Form von Eckverbindungen ohne Klemmfunktion (8) an jeweils einer Kette samt Haken (7) fixiert sind, wobei die Haken in den Lochungen (4) entlang der vertikalen Zeltstangen (3) an der Zeltrahmenkonstruktion (1) auf gleicher Höhe eingehängt werden.
Punkt 5: Vorrichtung nach Punkt 4, dadurch gekennzeichnet, dass die Ablage nicht mittels Führungen in Form von Eckverbindungen (8) entlang der vertikalen Zeltstangen eingehängt ist, sondern diese frei schwingend an Ketten samt Haken (7) fixiert ist, wobei die Haken in den Lochungen (4) entlang der vertikalen Zeltstangen (3) an der Zeltrahmenkonstruktion (1) auf gleicher Höhe eingehängt werden.
Punkt 6: Vorrichtungen nach wenigstens einem der Punkte 1 bis 5, dadurch gekennzeichnet, dass die Ablagefläche nicht aus einer Stangenunterkonstruktion (2) für eine weitere Auflage besteht, sondern gleich eine geeignete Ablagefläche an den vertikalen Zeltstangen (3) der Zeltrahmenkonstruktion (1) aufgehängt ist, sodass zum Abstellen von Pflanzen kein Untersetzer benötigt wird.

## Patentansprüche

1. Zelt zur Pflanzenaufzucht mit einer Ablagefläche, wobei das Zelt eine Zeltrahmenkonstruktion (1) mit vertikalen Zeltstangen (3) und die Ablagefläche eine Auflage zur Aufnahme der Pflanzen als Untersetzer aufweist, **dadurch gekennzeichnet, dass** die Ablagefläche höhenverstellbar über Eckverbindungen (5,8) direkt mit den vertikalen Zeltstangen (3) stabil und gewichtskraftaufnehmend zur Aufnahme einer Belastung durch Pflanzen, Erde und Gießwasser von mindestens 2,0 kg/dm² verbunden ist.

2. Zelt nach Anspruch 1, **dadurch gekennzeichnet, dass** die Auflage der Ablagefläche direkt mit den vertikalen Zeltstangen (3) verbunden ist.

3. Zelt nach Anspruch 1, **dadurch gekennzeichnet, dass** die Ablagefläche eine als Unterkonstruktion dienende ebene Stangenkonstruktion (2) aus Hohlrohren aus Metall aufweist.

4. Zelt nach Anspruch 3, **dadurch gekennzeichnet, dass** die Unterkonstruktion mit der Zeltrahmenkonstruktion (1) durch Führungen in Form von Eckverbindungen (5) mit Klemmfunktion mit den vertikalen Zeltstangen (3) verbunden sind und die vertikalen Zeltstangen (3) direkt durch die Eckverbindungen (5) mit Klemmfunktion geführt sind und dass die Eckverbindungen (5) mit Schrauben zur Aufnahme einer Belastung durch Pflanzen, Erde und Gießwasser von mindestens 2,0 kg/dm² festziehbar sind.

5. Zelt nach Anspruch 4, **dadurch gekennzeichnet, dass** die Ablagefläche stufenlos entlang der vertikalen Zeltstangen (3) der Zeltrahmenkonstruktion (1) anhand der lockerbaren und wieder feststellbaren Führungen in Form von Eckverbindungen (5) mit Klemmfunktion höhenverstellbar ist.

6. Zelt nach Anspruch 4 oder 5, **dadurch gekennzeichnet, dass** die höhenverstellbare Ablagefläche durch Sicherungssplinten (6) in Lochungen an den vertikalen Zeltstangen (3) unterhalb der Führungen gegen das Abrutschen gesichert ist.

7. Zelt nach einem der Ansprüche 1 bis 3, **dadurch gekennzeichnet, dass** die Führungen in Form von Eckverbindungen (8) mit einer Kette (7) samt Haken verbunden sind, wobei die Haken in Lochungen (4) entlang der vertikalen Zeltstangen (3) an der Zeltrahmenkonstruktion (1) auf gleicher Höhe eingehängt sind.

8. Zelt nach Anspruch 7, **dadurch gekennzeichnet, dass** die Führungen frei schwingend über die Ketten (7) mit den vertikalen Zeltstangen (3) verbunden sind.
